# EUROPÄISCHE PATENTSCHRIFT

(11) **EP 2 886 566 B1**
(45) Veröffentlichungstag und Bekanntmachung des Hinweises auf die Patenterteilung: **14.09.2016**
(21) Anmeldenummer: 13198705.9
(22) Anmeldetag: 20.12.2013
(51) Int. Cl.: C08F 236/06, C08F 236/10, C08L 9/00, C08L 9/06

(54) **Kautschukmischung und Fahrzeugreifen**
Rubber composition and vehicle tyre
Composé caoutchouc et pneu de véhicule

(43) Veröffentlichungstag der Anmeldung: 24.06.2015
(73) Patentinhaber: Continental Reifen Deutschland GmbH, 30165 Hannover (DE)
(72) Erfinder: Herzog, Katharina, 31177 Harsum (DE); Recker, Carla, 30167 Hannover (DE); Große, Julia, 30926 Seelze (DE)
(74) Vertreter: Finger, Karsten

(56) Entgegenhaltungen:
- EP-A1- 0 502 728
- EP-A1- 2 530 095
- WO-A1-2013/127448
- DATABASE WPI Week 200107 Thomson Scientific, London, GB; AN 2001-058727 XP002726598, & KR 2000 0019410 A (HANKOOK TIRE MFG CO LTD) 6. April 2000 (2000-04-06)

## Beschreibung

Die Erfindung betrifft eine Kautschukmischung, insbesondere für Fahrzeugreifen und einen Fahrzeugreifen.

Die Kautschukzusammensetzungen der einzelnen Bauteile von Fahrzeugreifen, insbesondere die Zusammensetzung des Laufstreifens, bestimmen in hohem Maße deren Fahreigenschaften. Unter dem Begriff Fahrzeugreifen werden in der vorliegenden Schrift Fahrzeugluftreifen, Vollgummireifen und Zweiradreifen verstanden.

Zur Beeinflussung der Mischungs- und Vulkanisateigenschaften werden den Mischungen unterschiedlichste Zuschlagstoffe beigemischt und/oder es werden spezielle Polymere verwendet. Als Zuschlagstoffe seien beispielhaft an dieser Stelle Füllstoffe (z. B. Ruß), Weichmacher, Alterungsschutzmittel und Vernetzungssysteme aus Schwefel, Beschleuniger und Aktivator genannt.

Durch die Vernetzung der Polymerketten mit Hilfe des Vulkanisationssystems wird ein dreidimensionales weitmaschiges chemisches Netzwerk geschaffen, wodurch die Kautschukmischung je nach Vernetzungsdichte z.B. härter und rissfester, insbesondere durch einen erhöhten Weiterreißwiderstand, wird.
Bei der Vernetzung bilden sich sogenannte Netzknoten, an denen die Polymerketten aneinander geknüpft werden, und zwar meist über Brücken, wie z.B. Schwefelbrücken bei der Schwefelvernetzung von Dienkautschuken. Die Länge der Schwefelbrücken, d.h. die Anzahl der S-Atome pro Vernetzungsbrücke, hängt von dem Verhältnis von Schwefel zu Beschleuniger ab, wobei man in der Regel zwischen konventionellem (Schwefel/Beschleuniger-Verhältnis von 10:1 bis 2:1), semi-effizientem (SchwefelBeschleuniger-Verhältnis von 2:1 bis 1:2) und effizientem (Schwefel/Beschleuniger-Verhältnis von 1:2 bis 1:10) Netzwerk unterscheidet.

Bei der sogenannten Schwefelvernetzung sind die Polymerketten derart über Schwefelbrücken aneinander geknüpft, dass eine Vielzahl von freien Kettenenden vorliegt. Diese freien Polymerkettenenden sind besonders beweglich und können Energie aufnehmen und in Bewegungsenergie umwandeln. Die Kautschukmischung wirkt daher energiedämpfend, was sich z.B. bei der Anwendung im Fahrzeugreifen negativ auf dessen Rollwiderstand auswirkt.

Der Erfindung liegt daher nun auf Basis des Standes der Technik die Aufgabe zu Grunde, eine Kautschukmischung, insbesondere für Fahrzeugreifen, bereitzustellen, die sich durch eine weitere Verbesserung im Rollwiderstandsverhalten sowie im Abriebverhalten auszeichnet, wobei die weiteren Eigenschaften, insbesondere die Nassgriffeigenschaften, auf gleichem Niveau verbleiben.

Gelöst wird diese Aufgabe durch eine Kautschukmischung, die wenigstens die folgenden Bestandteile enthält:
- 5 bis 100 phr zumindest eines Polymers A gemäß folgender Formel I):

   I) F-(P-Y-P-Sₓ)_{z}-P-Y-P-F

   wobei
   S ein Schwefelatom ist, und
   P eine elastomere Polymerkette ist, die durch die anionische Polymerisation von wenigstens einem konjugierten Dien und optional wenigstens einer vinylaromatischen Verbindung in der Anwesenheit eines Diinitiators erhalten wurde, und
   Y eine Dicarbanion-Gruppe ist, die abgeleitet ist von dem Diinitiator,
      und
   x unabhängig für jede Sₓ-Gruppe eine ganze Zahl gleich 1 oder größer ist, mit der Bedingung, dass x für wenigstens eine Sₓ-Gruppe ausgewählt ist aus den Zahlen 2, 3 und 4, und
   z eine ganze Zahl von 1 bis 160 ist, und
   jedes F unabhängig voneinander eine Endgruppe ausgewählt aus der Gruppe bestehend aus -H, -SH, -SOH, -SCl, -SSCl, -SO₂H und -SO₃H ist,
   und
- wenigstens einen Füllstoff.

Überraschenderweise wurde gefunden, dass durch zumindest ein Polymer A gemäß obiger Ausführung in Kombination mit wenigstens einem Füllstoff die Abriebeigenschaften und das Rollwiderstandsverhalten der Kautschukmischung verbessert werden.
Gleichzeitig verbleiben die übrigen Reifeneigenschaften auf einem annähernd gleich hohen Niveau oder werden sogar verbessert, wobei insbesondere das Nassgriffverhalten und/oder die Reißeigenschaften und/oder das Trockenbremsverhalten der Kautschukmischung auf einem annähernd gleich hohen Niveau verbleiben oder sogar verbessert werden.

Erfindungswesentlich ist es, dass die Kautschukmischung wenigstens einen Füllstoff enthält. Hierbei kann es sich um alle in der Kautschukindustrie denkbaren Füllstoffe handeln, wie Ruß oder Kieselsäure oder andere polare Füllstoffe, wie beispielsweise Alumosilicate, Kreide, Stärke, Magnesiumoxid, Titandioxid oder Kautschukgele.

Bevorzugt handelt es sich bei dem Füllstoff um wenigstens eine Kieselsäure und/oder wenigstens einen Ruß.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 250 m²/g, besonders bevorzugt von 100 bis 250 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen. Besonders bevorzugt handelt es sich bei dem Füllstoff um wenigstens eine Kieselsäure.

Bevorzugt wird ein Kupplungsagens, in Form von Silan oder einer siliziumorganischen Verbindung, verwendet. Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B.3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Die Menge des Kupplungsagens beträgt bevorzugt 0,1 bis 20 phf, besonders bevorzugt 1 bis 15 phf.
Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Als Ruße kommen alle der fachkundigen Person bekannten Rußtypen in Frage.
In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 kg/g, und eine DBP-Zahl gemäß ASTM D 2414 von 60 bis 200 ml/100 g, bevorzugt 70 bis 200 ml/100g, besonders bevorzugt 90 bis 200 ml/100g.
Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden.

Besonders bevorzugt handelt es sich bei dem Füllstoff in der erfindungsgemäßen Kautschukmischung um wenigstens eine Kieselsäure, wobei eine oder mehrere verschiedene Kieselsäuren mit den oben genannten Merkmalen denkbar sind.
Gemäß einer vorteilhaften Weiterbildung der Erfindung enthält die Kautschukmischung außer einer oder mehrerer Kieselsäure(n) keinen weiteren Füllstoff.

Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.
Auch Graphit und Graphene sowie sogenannte "carbon-silica dual-phase filler" sind als Füllstoff denkbar.

Die erfindungsgemäße Kautschukmischung enthält 0 bis 300 phr, bevorzugt 20 bis 300 phr, besonders bevorzugt 20 bis 150 phr und ganz besonders bevorzugt 80 bis 110 phr wenigstens einer Kieselsäure.

Die erfindungsgemäße Kautschukmischung enthält 0 bis 200 phr wenigstens eines Rußes, bevorzugt 0 bis 150 phr, besonders bevorzugt 0 bis 100 phr.
Gemäß einer vorteilhaften Weiterbildung enthält die Kautschukmischung 0 phr Ruß, d.h. sie ist frei von Ruß.
Gemäß einer weiteren vorteilhaften Weiterbildung der Erfindung enthält die Kautschukmischung 0,1 bis 200 phr, bevorzugt 0,1 bis 150 phr, besonders bevorzugt 0,1 bis 100 phr, ganz besonders bevorzugt 5 bis 100 phr wenigstens eines Rußes.

Es ist erfindungswesentlich, dass die Kautschukmischung 5 bis 100 phr zumindest eines Polymers A gemäß folgender Formel I) enthält:

I) F-(P-Y-P-Sₓ)_{z}-P-Y-P-F

wobei
S ein Schwefelatom ist, und
P eine elastomere Polymerkette ist, die durch die anionische Polymerisation von wenigstens einem konjugierten Dien und optional wenigstens einer vinylaromatischen Verbindung in der Anwesenheit eines Diinitiators erhalten wurde, und
Y eine Dicarbanion-Gruppe ist, die abgeleitet ist von dem Diinitiator,
   und
x unabhängig für jede Sₓ-Gruppe eine ganze Zahl gleich 1 oder größer ist, mit der Bedingung, dass x für wenigstens eine Sₓ-Gruppe ausgewählt ist aus den Zahlen 2, 3 und 4, und
z eine ganze Zahl von 1 bis 160 ist, und
jedes F unabhängig voneinander eine Endgruppe ausgewählt aus der Gruppe bestehend aus -H, -SH, -SOH, -SCl, -SSCl, -SO₂H und -SO₃H ist.

Das Polymer A ist somit ein innerhalb der Ketten schwefelmodifiziertes Polymer. Hierbei ist es erfindungswesentlich, dass die Sₓ-Gruppe(n) in die Kette gemäß Formel I) eingebunden ist/sind.

Unter "Polymer A" wird im Rahmen der vorliegenden Erfindung ein Polymer der oben beschriebenen Formel I) mit den oben beschriebenen Merkmalen inklusive der unten genannten Ausführungsformen verstanden.

Die erfindungsgemäße Kautschukmischung wird bei der Vulkanisation vernetzt. Hierbei öffnen sich die Polymerketten an und/oder innerhalb der Sₓ-Gruppen, so dass formal während der Vulkanisation Polymerabschnitte P mit vulkanisierbaren Endgruppen gebildet werden. Bei der Reaktion eines Kettenendes mit einer Doppelbindung des Dienkautschuks ist somit die Bildung eines trifunktionalen Netzknotens denkbar.
Es wurde gefunden, dass die erfindungsgemäße Kautschukmischung im Vergleich zum Stand der Technik verbesserte Rollwiderstandsindikatoren aufweist. Es wird daher davon ausgegangen, dass bei dieser Netzwerk-Struktur, anders als bei der Vernetzung von im Stand der Technik bekannten Polymeren, nur in geringem Maße oder keine freien Kettenenden entstehen. Freie Kettenenden können aufgenommene Energie in Bewegungsenergie umwandeln, sodass Kautschukmischungen mit vielen freien Kettenenden der vernetzten Polymere ein hohes Dämpfungsverhalten und damit ein nachteiliges Rollwiderstandsverhalten aufzeigen. In der erfindungsgemäßen Kautschukmischung verbleiben durch das Polymer A kaum freie Kettenenden nach der Vulkanisation, sodass die erfindungsgemäße Kautschukmischung ein verbessertes Rollwiderstandsverhalten aufweist.
Ferner stellen Polymere A gemäß Formel I) über Schwefel linear miteinander verbundene Polymerketten dar, wodurch ebenfalls die Zahl der freien Kettenenden im Vergleich zum Stand der Technik verringert ist. Bei der Schwefelvulkanisation nach Stand der Technik mit freiem Schwefel sind an einem Schwefelnetzknoten üblicherweise vier Polymerketten in der Mitte der Kette gebunden, also nicht am Kettenende, und somit vier freie Kettenenden, vorhanden.

Das in der erfindungsgemäßen Kautschukmischung enthaltene Polymer A enthält wie in Formel I) dargestellt Polymerketten P. Diese wurden durch anionische Polymerisation von wenigstens einem konjugierten Dien und optional wenigstens einer vinylaromatischen Verbindung in der Anwesenheit eines Diinitiators erhalten. Die resultierenden lebenden anionischen Polymerketten wurden mit Dischwefelchlorid S₂Cl₂ umgesetzt. Hierdurch sind die schwefelmodifizierten Polymere gemäß Formel I) entstanden.

Das wenigstens eine konjugierte Dien kann jedes dem Fachmann bekannte konjugierte Dien sein. Bevorzugt ist das konjugierte Dien ausgewählt aus der Gruppe enthaltend 1,3-Butadien und/oder 2-(C₁-C₅-Alkyl)-1,3-Butadien und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien.
Es ist denkbar, dass eines oder zwei oder mehr der genannten konjugierten Diene im Gemisch miteinander verwendet wurden.
Ein Beispiel für ein 2-(C₁-C₅-Alkyl)-1,3-Butadien ist Isopren (2-Methyl-1,3-Butadien). Besonders bevorzugt ist das konjugierte Dien ausgewählt aus der Gruppe bestehend aus 1,3-Butadien und/oder Isopren und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien.
Ganz besonders bevorzugt handelt es sich bei dem wenigstens einen konjugierten Dien um Isopren und/oder 1,3-Butadien.

Gemäß einer bevorzugten Ausführungsform der Erfindung ist das konjugierte Dien 1,3-Butadien. Gemäß einer bevorzugten Weiterbildung der Erfindung sind die Polymerketten durch Polymerisation von 1,3-Butadien ohne weitere konjugierte Diene und ohne eine vinylaromatische Verbindung entstanden, und stellen damit Ketten von Butadien-Kautschuk (BR) dar.

Der Begriff "vinylaromatische Verbindung" umfasst im Rahmen der vorliegenden Erfindung monovinylaromatische Verbindungen, d.h. Verbindungen, bei denen nur eine Vinylgruppe an eine aromatische Gruppe gebunden ist, sowie vinylaromatische Verbindungen, bei denen zwei oder mehr Vinylgruppen an eine aromatische Gruppe gebunden sind.
Gemäß oben genannter Formel I) können die Polymerketten P optional wenigstens ein vinylaromatisches Monomer enthalten.

Als vinylaromatische Verbindung ist jede dem Fachmann bekannte denkbar. Bevorzugt ist die vinylaromatische Verbindung ausgewählt aus der Gruppe enthaltend Styrol und/oder C₁₋₄-Alkylsubstituierte Styrole und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder divinylaromatische Verbindungen.
Bei den C₁₋₄-Alkylsubstituierten Styrolen kann es sich beispielsweise um 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol handeln.
Bei den divinylaromatische Verbindungen kann es sich beispielsweise um 1,2-Divinylbehzol und/oder 1,3-Divinylbenzol und/oder 1,4-Divinylbenzol handeln.

Es ist denkbar, dass eine oder zwei oder mehr vinylaromatische Verbindungen im Gemisch miteinander verwendet wurden.

Bevorzugt ist die vinylaromatische Verbindung ausgewählt aus der Gruppe bestehend aus Styrol und/oder 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder 1,2-Divinylbenzol und/oder 1,3-Divinylbenzol und/oder 1,4-Divinylbenzol.

Gemäß einer bevorzugten Ausführungsform der Erfindung werden die Polymerketten P durch die anionische Polymerisation von wenigstens einem konjugierten Dien und wenigstens einer vinylaromatischen Verbindung in der Anwesenheit eines Diinitiators erhalten.
Besonders bevorzugt ist die vinylaromatische Verbindung Styrol.

Gemäß einer bevorzugten Ausführungsform der Erfindung sind die elastomeren Polymerketten P durch anionische Polymerisation von wenigstens 1,3-Butadien und Styrol entstanden. Hierbei ist es denkbar, dass ein drittes oder weitere Monomere in den Polymerketten P enthalten sind.

Gemäß einer besonders bevorzugten Ausführungsform der Erfindung sind die elastomeren Polymerketten P durch anionische Polymerisation von 1,3-Butadien und Styrol entstanden. Gemäß dieser besonders bevorzugten Ausführungsform der Erfindung handelt es sich bei dem Polymer A somit um einen mit Schwefel modifizierten Styrol-Butadien-Kautschuk gemäß Formel II).

II) F-(SBR-Y-SBR-Sₓ)_{z}-SBR-Y-SBR-F,

wobei SBR eine elastomere Polymerkette ist, die durch die anionische Polymerisation von 1,3-Butadien und Styrol in der Anwesenheit eines Diinitiators erhalten wurde, und alle anderen Gruppen und Parameter wie oben für Formel I) beschrieben definiert sind.

Der Styrol-Gehalt des Polymers A gemäß Formel II) beträgt bevorzugt 5 bis 70 Gew.-%, besonders bevorzugt 5 bis 60 Gew.-%, und ganz besonders bevorzugt 5 bis 50 Gew.-%, bezogen auf die Gesamtmasse des Polymers.
Weniger als 5 Gew.-% Styrol führen in der erfindungsgemäßen Kautschukmischung zu einer verschlechterten Balance zwischen den Indikatoren für Rollwiderstand, Nassgriff und Abriebwiderstand und zu einer verringerten Zugfestigkeit. Mehr als 70 Gew.-% Styrol wirken sich nachteilig auf den Hystereseverlust aus.

Mit einem Polymer A gemäß Formel II) ist es in der erfindungsgemäßen Kautschukmischung besonders gut möglich, insbesondere durch den Einsatz im Laufstreifen, den Rollwiderstand und die Abriebfestigkeit von Fahrzeugreifen auf Basis des Standes der Technik weiter zu verbessern ohne dass sich die anderen Reifeneigenschaften verschlechtern.

Bei den SBR-Einheiten des Polymers A gemäß Formel II) kann es sich um BlockCopolymere oder um statistische Copolymere (*engl.* "random copolymer") handeln. Bevorzugt sind 40 Gew.-% oder mehr der Styrol-Monomere einzeln verlinkt, während 10 Gew.-% oder weniger in Blöcken von acht oder mehr aneinander geknüpften StyrolMonomeren vorliegen. Ein Polymer, welches außerhalb dieser Grenzen fällt, kann einen erhöhten Hystereseverlust aufweisen. Die Länge der miteinander verknüpften Styrol-Einheiten wird mittels Ozonolyse-Gelpermeations-Chromatographie bestimmt, wie es in Tanaka et al., Polymer, Vol. 22, Pages 1721-1723, 1981, beschrieben ist.

Der Vinyl-Gehalt des Polymers A gemäß Formel I) inklusive der Ausführungsform gemäß Formel II) beträgt bevorzugt 2 bis 90 Gew.-%, besonders bevorzugt 5 bis 75 Gew.-%, bezogen auf die Menge an konjugiertem Dien, z.B. der Butadienmenge, im Polymer. Weniger als 2 Gew.-% Vinyl-Gehalt führen in der erfindungsgemäßen Kautschukmischung zu einer verschlechterten Balance zwischen den Indikatoren für Rollwiderstand, Nassgriff und Abriebresistenz und zu einer verringerten Zugfestigkeit. Mehr als 90 Gew.-% Vinyl-Gehalt wirken sich nachteilig auf die Zugfestigkeit, die Abriebresistenz und den Hystereseverlust aus.

Gemäß einer vorteilhaften Ausführungsform der Erfindung weist das Polymer A gemäß Formel I) inklusive der Ausführungsform gemäß Formel II) vor der Vulkanisation der Kautschukmischung eine Glasübergangstemperatur T_{g} von -100 bis 0 °C, bevorzugt -85 bis - 0 °C auf. Besonders bevorzugt beträgt die T_{g} des Polymers A vor der Vulkanisation -30 bis -0 °C, ganz besonders bevorzugt -30 bis -10 °C.

Die Polymerisation, durch die die Polymerketten P erhalten wurden, ist bevorzugt eine Lösungspolymerisation.
Bevorzugt handelt es sich somit bei dem schwefelmodifizierten Polymer A gemäß Formel II) um einen schwefelmodifizierten SSBR.

Die Art der Aufarbeitung nach der Umsetzung der Polymerketten mit S₂Cl₂ bestimmt die Art der Endgruppen F in der Formel I) inklusive der Ausführungsform gemäß Formel II) des Polymers A. Ein anionisches Polymerkettenende, welches nicht mit S₂Cl₂ reagiert hat und während der Aufarbeitung protoniert wurde, trägt ein Wasserstoffatom, -H, als Endgruppe. Ein Polmyerkettenende, welches mit S₂Cl₂ reagiert hat und zwar ohne eine weitere Verknüpfung an eine andere lebende anionische Polymerkette trägt -SSCl als Endgruppe oder Derivate bzw. weitere Reaktionsprodukte, insbesondere Oxidationsprodukte, von S₂Cl₂ wie -SH, -SOH, -SCl, -SO₂H oder -SO₃H.

Der bei der Polymerisation von z.B. 1,3-Butadien und Styrol verwendete Diinitiator kann jede dem Fachmann bekannte Verbindung sein, die den Effekt aufweist, bei der Polymerisation als Initiator zu agieren und die wenigstens zwei Carbanionen, also z.B. ein Dicarbanion, pro (Initiator-)Molekül bei der Polymerisation bereitstellt. Bevorzugt ist der Diinitiator eine Organolithium-Verbindung. Denkbare Diinitiatoren werden beispielsweise in folgenden Schriften beschrieben:
EP 0 316 857, EP 0 413 294, US 4,182,818, US 4,196,153, US 5,561,210, US 5,521,255 und WO 2011/047220. Derartige Diinitiatoren sind beispielsweise:
   1,3-Phenylen-bis(3-methyl-1-phenylpentyliden)bislithium,
   1,3-Phenylen-bis(3-methyl-1-(4-methyl)phenylpentyliden)bislithium,
   1,3-Phenylen-bis(3-methyl-1-(4-ethyl)phenylpentyliden)bislithium,
   1,3-Phenylen-bis(3-methyl-1-(4-(1,1-dimethyl)ethyl)phenylpentyliden)bislithium,
   1,3-Phenylen-bis(3-methyl-1-(4-dodecyl)phenylpentyliden)bislithium,
   1,3-Phenylen-bis(3-methyl-1-(1-methyl)phenylpentyliden)bislithium,
   1,4-Phenylen-bis(3-methyl-1-phenylpentyliden)bislithium.

Gemäß einer bevorzugten Ausführungsform der Erfindung ist der Diinitiator 1,3-Phenylen-bis(3-methyl-1-(4-methyl)phenylpentyliden)bislithium und hat somit folgende Strukturformel II)

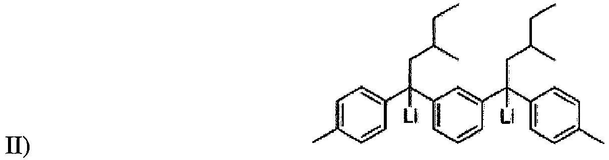

Dies bedeutet, dass Y bei dieser Ausführungsform der Erfindung in der Formel I) inklusive der Ausführungsform gemäß Formel II) des Polymers A das Dicarbanion 1,3-Phenylen-bis(3-methyl-1-(4-methyl)phenylpentyliden)²⁻ ist.

Es ist ferner denkbar, dass der Diinitiator in Kombination mit wenigstens einem weiteren Initiator verwendet wird. Bevorzugt ist der weitere Initiator eine Organolithiumverbindung, wie beispielsweise Ethyllithium, Propyllithium, n-Butyllithium, sec-Butyllithium, tert-Butyllithium, Phenyllithium, Hexyllithium, 1,4-Dilithio-n-Butane, 1,3-Di(2-Lithio-2-Hexyl)benzol und 1,3-Di(2-Lithio-2-Propyl)benzol. Als weiterer Initiator werden besonders bevorzugt n-Butyllithium und/oder sec-Butyllithium verwendet.

Das Polymer A enthält wie an den oben abgebildeten Formeln I) und II) erkennbar innerhalb der Polymerketten mehrere Schwefelatome in den Sₓ-Gruppen. Das Polymer A gemäß Formel I) inklusive der Ausführungsform gemäß Formel II) enthält Schwefel in Mengen von 0,1 bis 30 g pro kg Polymer (abgekürzt: g/kg Polymer), bevorzugt 0,1 bis 10 g/kg Polymer und besonders bevorzugt 0,5 bis 3 g/kg Polymer und ganz besonders bevorzugt 2 bis 3 g/kg Polymer.
Die Bestimmung des Schwefel-Gehaltes erfolgt mittels Röntgenfluoreszenzspektrometrie (Axios Spektrometer, PANalytical; Datenanalyse mittels Software PCFPW, Fa. Fundex; Probenvorbereitung in einer Heißpresse und anschließend sofortige Messung) Gemäß Formel I) ist z eine ganze Zahl von 1 bis 160. Bevorzugt ist z eine ganze Zahl von 1 bis 80 und besonders bevorzugt von 1 bis 40.
In einer bevorzugten Ausführungsform der Erfindung ist z mindestens 2, sodass wenigstens zwei Sₓ-Gruppen in dem Polymer vorhanden sind.

Gemäß Formel I) inklusive der Ausführungsform gemäß Formel II) ist x unabhängig für jede Sₓ-Gruppe eine ganze Zahl gleich 1 oder größer ist, mit der Bedingung, dass x für wenigstens eine Sₓ-Gruppe ausgewählt ist aus den Zahlen 2, 3 und 4.
In einer bevorzugten Ausführungsform der Erfindung ist x eine ganze Zahl von 1 bis 8, besonders bevorzugt 1 bis 6, ganz besonders bevorzugt von 1 bis 4, wobei die Bedingung gilt, dass x für wenigstens eine Sₓ-Gruppe ausgewählt ist aus den Zahlen 2, 3 und 4.

In einer besonders bevorzugten Ausführungsform der Erfindung ist z eine ganze Zahl von 1 bis 40 und x eine ganze Zahl von 1 bis 4, wobei die Bedingung gilt, dass x für wenigstens eine Sₓ-Gruppe ausgewählt ist aus den Zahlen 2, 3 und 4.

Das durchschnittliche Molekulargewicht (M_{w}) des schwefelhaltigen Polymers A gemäß Formel I) inklusive der Ausführungsform gemäß Formel II) beträgt 5 bis 2000 kg/mol, bevorzugt 10 bis 1500 kg/mol und besonders bevorzugt 15 bis 1000 kg/mol.

Die Bestimmung des Molekulargewichtes (Gewichtsmittel M_{w} und Zahlenmittel Mₙ) des Polymers erfolgt mittels Gelpermeationschromatographie (GPC mit Tetrahydrofuran (THF) als Elutionsmittel bei 40 °C, kalibriert mit Polystyrol-Standard EasiCal PS-1; Größenausschlußchromatographie; engl. SEC = size exclusion chromatography; Probevorbereitung: 9 bis 11 mg getrocknetes Polymer mit einem Feuchtigkeitsgehalt von < 0,6 % in 10 mL THF durch 20 minütiges Schütteln gelöst, anschl. Polymerlösung durch einen 0,45 µm-Einwegfilter in ein 2 mL Ampulle überführt, Messung im GPC mit Elutionsrate von 1 mL/min, Injektionsvolumen 100 µL, Messinstrument Agilent Series 1100 /1200; Modul Setup: Iso Pumpe, Autosampler, Thermostat, VW - Detektor, RI-Detektor, Degasser; Säulen PL Mixed B / HP Mixed B., 3 Säulen mit je 300 mm Länge: Säulentyp 79911 GP- MXB, Plgel 10 µm MIXED-B GPC/SEC Columns, Agilent Technologies).

Die Bestimmung des Vinyl-Gehaltes bezogen auf die Butadienmenge der im Rahmen der vorliegenden Erfindung diskutierten Polymere erfolgt mittels Infrarot-Absorptionsspektrometrie (IR; Morello Methode, IFS 66 FT-IR Spektrometer, Bruker Analytic GmbH, Probevorbereitung durch Quellung in CS₂).

Die Bestimmung des Styrol-Gehaltes der im Rahmen der vorliegenden Erfindung diskutierten Polymere erfolgt mittels IR, IFS 66 FT-IR Spektrometer, Bruker Analytic GmbH, Probevorbereitung durch Quellung in CS₂, Bestimmung der Kalibrationskurve, gebundener Styrol-Gehalt durch Festsetzung folgender Banden: a) für trans-1,4-Polybutadien Einheiten bei 966 cm⁻¹, b) für cis-1,4-Polybutadien Einheiten bei 730 cm⁻¹, c) für 1,2-Polybutadien Einheiten bei 910 cm⁻¹, und d) für gebundenes Styrol ("bonded styrene (styrene aromatic bond)") bei 700 cm⁻¹. Die Bandenhöhen werden entsprechend der passenden Extinktionskoeffizienten normalisiert und zu 100 % aufsummiert. Die Normalisierung erfolgt mittels ¹H- and ¹³C-NMR. Der Styrol-Gehalt wurde zudem alternativ mittels NMR (Avance 400 (¹H = 400 MHz; ¹³C = 100 MHz), Bruker Analytik GmbH) bestimmt.

Die Bestimmung der Glasübergangstemperatur (T_{g}) der unvulkanisierten Polymere erfolgt anhand von Dynamischer Differenz-Kalorimetrie (engl. Dynamic Scanning Calorimetry, DSC 2920 (TA Instrument).

Das Polymer A gemäß Formel I) inklusive der Ausführungsform gemäß Formel II) weist bevorzugt eine Mooney-Viskosität (ML1+4, 100°C, gemäß ASTM D 1646 (2004)) kleiner oder gleich 150 Mooney-Einheiten (*engl.* MU = Mooney units) auf, besonders bevorzugt kleiner oder gleich 120, ganz besonders bevorzugt kleiner oder gleich 100 und wiederum ganz besonders bevorzugt von 10 bis 100.
Mit einer Mooney-Viskosität des Polymers A von kleiner oder gleich 100 ist eine gute Verarbeitbarkeit (z.B. Wärmeaufbau im Innenmischer, Füllstoffverteilung, Extrusionsverhalten) der erfindungsgemäßen Kautschukmischung gegeben.

Gemäß einer vorteilhaften Ausführungsform der Erfindung enthält die Kautschukmischung 100 phr des Polymers A, d.h. sie enthält keinen weiteren Kautschuk und alle anderen Gewichtsangaben beziehen sich auf 100 Gew.-% des Polymers A.

Gemäß einer weiteren vorteilhaften Ausführungsform der Erfindung enthält die Kautschukmischung 5 bis 99 phr des Polymers A in Kombination mit 1 bis 95 phr wenigstens eines weiteren Kautschuks.

Der wenigstens eine weitere Kautschuk ist dabei ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Flüssigkautschuken und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk.
Bevorzugt handelt es sich bei dem weiteren Kautschuk um wenigstens einen Dienkautschuk, der ausgewählt ist aus der Gruppe bestehend aus synthetischem Polyisopren und natürlichem Polyisopren (NR) und Styrol-Butadien-Kautschuk und Polybutadien (BR).
Dabei kann es sich bei dem natürlichen Polyisopren und dem synthetischen Polyisopren um alle dem Fachmann bekannten Typen handeln.
Bevorzugt handelt es sich bei dem weiteren Dienkautschuk wenigstens um natürliches Polyisopren. Hiermit wird eine besonders gute Verarbeitbarkeit (Extrudierbarkeit, Mischbarkeit, etc.) der erfindungsgemäßen Kautschukmischung erzielt. Der Styrol-Butadien-Kautschuk aus der Gruppe der weiteren Dienkautschuke ist im Rahmen der vorliegenden Anmeldung ein im Stand der Technik bekannter Styrol-Butadien-Kautschuk.

Es können in der Kautschukmischung noch 0 bis 100 phr, bevorzugt 0,1 bis 80 phr, bevorzugt 0,1 bis 70 phr, zumindest eines Weichmachers vorhanden sein.
Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphtenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.
Da in dem Polymer A gemäß Formel I) inklusive der Ausführungsform gemäß Formel II) Schwefel gebunden ist, der freigesetzt werden kann, werden alle anderen schwefelspendenden Verbindungen als "weiterer Schwefelspender" bezeichnet.
Schwefel und/oder weitere Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049261 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel (1):

(1) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Im Rahmen der vorliegenden Erfindung werden Schwefel und weitere Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049261 A2 beschrieben, wie z.B. ein Vulkanisationsmittel der Formel (1), sowie die oben genannten Systeme Vulkuren®, Duralink® und Perkalink® begrifflich als Vulkanisationsmittel zusammengefasst.

Aufgrund des in die Polymerketten eingebunden Schwefels des Polymers A werden der Kautschukmischung vor der Vulkanisation vergleichsweise geringe Mengen Schwefel in Form von elementarem Schwefel und/oder weiteren Schwefelspendern zugesetzt. Die benötigte Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0 bis 5 phr. Für Laufstreifen von Fahrzeugreifen, die in der Regel gegenüber dem Wulst einen geringeren Schwefelgehalt aufweisen, beträgt die Menge an zuzugebendem elementaren Schwefel bevorzugt 0,1 bis 1 phr, besonders bevorzugt 0,1 bis 0,5 phr.

Es ist gemäß einer Ausführungsform der Erfindung denkbar, dass kein elementarer Schwefel und kein weiterer Schwefelspender, also 0 phr Schwefel und 0 phr weiterer Schwefelspender, zugesetzt werden.

Gemäß einer vorteilhaften Weiterbildung der Erfindung werden mehrere Beschleuniger eingesetzt. Bevorzugt wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Außerdem können in der Kautschukmischung Vulkanisationsverzögerer vorhanden sein.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, einen Fahrzeugreifen bereitzustellen, der im Vergleich zum Stand der Technik optimierte Abriebeigenschaften und ein verbessertes Rollwiderstandsverhalten aufweist, ohne dass andere relevante Eigenschaften, wie Nassbremsen und/oder Trockenbremsen und/oder die Reißeigenschaften, signifikant negativ beeinträchtigt werden.

Gelöst wird diese Aufgabe dadurch, dass der Fahrzeugreifen in wenigstens einem Bauteil wenigstens eine oben beschriebene erfindungsgemäße Kautschukmischung enthält. Hierbei umfasst die Erfindung des Fahrzeugreifens alle oben genannten Beispiele, Ausführungsformen und Weiterbildungen der erfindungsgemäßen Kautschukmischung. Bevorzugt handelt es sich um einen Fahrzeugluftreifen.

Der Erfindung liegt weiterhin die Aufgabe zu Grunde, die Abriebeigenschaften und das Rollwiderstandsverhalten von Fahrzeugreifen zu optimieren, ohne dass andere relevante Eigenschaften, wie Nassbremsen und/oder Trockenbremsen und/oder die Reißeigenschaften, signifikant negativ beeinträchtigt werden.
Gelöst wird diese Aufgabe durch die Verwendung der obig beschriebenen Kautschukmischung, zur Herstellung von Fahrzeugreifen. Hierbei umfasst die Erfindung alle oben genannten Beispiele, Ausführungsformen und Weiterbildungen der erfindungsgemäßen Kautschukmischung.
Bevorzugt handelt es sich um einen Fahrzeugluftreifen.

Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr) oder auf 100 Gewichtsteile Kieselsäure bezogen sind (phf).

Die Mischungsherstellung erfolgte unter üblichen Bedingungen in zweiStufen in einem Labortangentialmischer. Die Kautschukmischung E1 weist 100 phr des Polymers A in der Ausführungsform gemäß oben beschriebener Formel II) auf. Bei der Kautschukmischung V1 wurde anstelle eines Polymers gemäß Formel I) oder II) ein Vergleichspolymer V gemäß Formel III) verwendet, welches im Vergleich zu dem beispielhaft verwendeten Polymer A gemäß Formel II) ein vergleichbares Molekulargewicht, einen vergleichbarenVinyl-Gehalt und einen vergleichbaren Styrol-Gehalt und ebenfalls Polymerabschnitte von SBR aufweist, welche jedoch statt über eine Sₓ-Gruppe über Siliziumatome miteinander verknüpft sind. Diese Polymerabschnitte des Vergleichspolymers weisen keine schwefelvulkanisierbaren Endgruppen auf.
Zudem wurde bei der Kautschukmischung E1 über eine Anpassung der Schwefel- und Beschleunigermengen eine ähnliche Härte (Shore A bei Raumtemperatur) eingestellt.

Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte (Einheit Shore A, abgekürzt ShA) bei Raumtemperatur (RT) gemäß DIN 53 505
- Rückprallelastizität (abgekürzt Rückprall) bei Raumtemperatur (RT) und 70°C gemäß DIN 53 512
- Spannungswerte bei 300 % Dehnung (Modul 300) bei Raumtemperatur (RT) gemäß DIN 53 504
- Zugfestigkeit und Bruchdehnung bei Raumtemperatur gemäß DIN 53 504
- Abrieb bei Raumtemperatur gemäß DIN53 516 bzw. DIN/ISO 4649
- Glasübergangstemperatur Tg der Kautschukmischung aus Verlustfaktor tan δ (tangens delta) aus dynamisch-mechanischer Messung gemäß DIN 53 513 (Temperaturdurchlauf, "temperature sweep")
- Maximaler Verlustfaktor tan δ (max) aus dynamisch-mechanischer Messung gemäß DIN 53 513 (Temperaturdurchlauf, "temperature sweep")

**Tabelle 1**

| **Bestandteile** | **Einheit** | **V1** | **E1** |
|---|---|---|---|
| Polymer A ^{a)} | phr | - | 100 |
| Polymer V ^{b)} | phr | 100 | - |
| Kieselsäure ^{c)} | phr | 95 | 95 |
| TDAE | phr | 35 | 35 |
| Alterungsschutzmittel | phr | 4 | 4 |
| Stearinsäure | phr | 2,5 | 2,5 |
| Zinkoxid | phr | 2,5 | 2,5 |
| Silan | phf | 7,2 | 7,2 |
| Beschleuniger DPG | phr | 2 | 2 |
| Beschleuniger CBS | phr | 3,6 | 2,7 |
| Schwefel | phr | 0,36 | 0,27 |
| | | | |

| **Physikalische Eigenschaften** | | | |
|---|---|---|---|
| Shore-Härte bei RT | Shore A | 64 | 65 |
| Rückprallelastizität bei RT | % | 14 | 15 |
| Rückprallelastizität bei 70 °C | % | 28 | 37 |
| Diff. der Rückprallelast. (70°C -RT) | | 14 | 22 |
| Zugfestigkeit | MPa | 6 | 8 |
| Bruchdehnung | % | 582 | 645 |
| Modul 300 | MPa | 3,5 | 4,0 |
| Tan δ (max) | | 0,276 | 0,246 |
| Tg aus tan δ | °C | -2 | -5 |
| Abrieb | mm³ | 343 | 317 |

### Verwendete Substanzen aus Tabelle 1:

^{a)} Polymer A: mit Schwefel modifizierter SSBR gemäß folgender Formel II):

   II) F-(SBR-Y-SBR-Sₓ)_{z}-SBR-Y-SBR-F

   Mit: Tg = -16,3 °C; Mooney-Viskosität = 94,3 MU; Vinyl-Gehalt = 68,1 Gew.-%;
   Styrol-Gehalt = 21,6 Gew.-%; Schwefelgehalt = 1,3 g/kg Polymer;
   M_{w} = 463 kg/mol; Mₙ = 194kg/mol; hergestellt aus: 14,35 mmol des Diinitiators 1,3-Phenylen-bis(3-methyl-1-(4-methyl)phenylpentyliden)bislithium gemäß Formel II); 10,99 mmol S₂Cl₂; 10,48 mol Butadien; 1,452 mol Styrol;
   7,158 mmol TMEDA (N,N,N',N'-Tetramethylethan-1,2-diamin)
^{b)} Polymer V: Vergleichspolymer gemäß folgender Formel III) 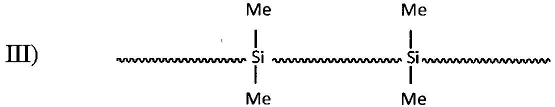
   Mit: Me = Methyl-Gruppe; T_{g} = -16,4 °C; Mooney-Viskosität = 32,6 MU; Vinyl-Gehalt = 67,5 Gew.-%; Styrol-Gehalt = 21,6 Gew.-%;
   Schwefelgehalt = 0 g/kg Polymer; M_{w} = 323 kg/mol, Mₙ = 102 kg/mol; hergestellt aus: 9,046 mmol des Diinitiators gemäß Formel II); 6,732 mmol Me₂SiCl₂;
   6,559 mol Butadien; 0,911 mol Styrol; 4,605 mmol TMEDA; die
   schlangenförmigen Linien stellen SBR-Copolymer-Einheiten dar.
^{c)} Kieselsäure: ULTRASIL^{®} VN3, Fa. Evonik

Wie aus Tabelle 1 hervorgeht, zeigt die erfindungsgemäße Kautschukmischung E1 gegenüber der Vergleichsmischung V1 bei nahezu gleicher Glasübergangstemperatur einen deutlich höheren Wert für die Rückprallelastizität bei 70 °C, welches ein Indikator für ein deutlich verbessertes Rollwiderstandsverhalten der erfindungsgemäßen Kautschukmischung gegenüber der Vergleichsmischung V1 ist. Zudem zeigt die erfindungsgemäße Kautschukmischung E1 ein verbessertes Abriebverhalten und eine erhöhte Zugfestigkeit.

Gleichzeitig bleiben die übrigen physikalischen Eigenschaften nahezu auf gleichem Niveau. Insbesondere ist die Differenz der Rückprallelastizitäten der E1 gegenüber der V1 deutlich erhöht, was ein Indikator dafür ist, dass die E1 auf einem höheren Niveau hinsichtlich des Zielkonfliktes aus Rollwiderstand vs. Nassgriff liegt.

Somit ist es mit der erfindungsgemäßen Kautschukmischung möglich, insbesondere durch den Einsatz im Laufstreifen, den Rollwiderstand und die Abriebfestigkeit von Fahrzeugreifen auf Basis des Standes der Technik weiter zu verbessern ohne dass sich die anderen Reifeneigenschaften verschlechtern.

## Patentansprüche

1. Kautschukmischung, **dadurch gekennzeichnet, dass** sie wenigstens die folgenden Bestandteile enthält:
- 5 bis 100 phr zumindest eines Polymers A gemäß folgender Formel I) enthält:
I) F-(P-Y-P-Sₓ)_{z}-P-Y-P-F
wobei
S ein Schwefelatom ist, und
P eine elastomere Polymerkette ist, die durch die anionische Polymerisation von wenigstens einem konjugierten Dien und optional wenigstens einer vinylaromatischen Verbindung in der Anwesenheit eines Diinitiators erhalten wurde, und
Y eine Dicarbanion-Gruppe ist, die abgeleitet ist von dem Diinitiator,
und
x unabhängig für jede Sₓ-Gruppe eine ganze Zahl gleich 1 oder größer ist, mit der Bedingung, dass x für wenigstens eine Sₓ-Gruppe ausgewählt ist aus den Zahlen 2, 3 und 4, und
z eine ganze Zahl von 1 bis 160 ist, und
jedes F unabhängig voneinander eine Endgruppe ausgewählt aus der Gruppe bestehend aus -H, -SH, -SOH, -SCl, -SSCl, -SO₂H und -SO₃H ist,
und
- wenigstens einen Füllstoff.

2. Kautschukmischung nach Anspruch 1, **dadurch gekennzeichnet, dass** das wenigstens eine konjugierte Dien ausgewählt ist aus der Gruppe bestehend aus 1,3-Butadien und/oder Isopren und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien.

3. Kautschukmischung nach Anspruch 2, **dadurch gekennzeichnet, dass** das wenigstens eine konjugierte Dien 1,3-Butadien ist.

4. Kautschukmischung nach einem der vorherigen Ansprüche, **dadurch gekennzeichnet, dass** die vinylaromatische Verbindung ausgewählt ist aus der Gruppe bestehend aus Styrol und/oder 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder 1,2-Divinylbenzol und/oder 1,3-Divinylbenzol und/oder 1,4-Divinylbenzol.

5. Kautschukmischung nach Anspruch 4, **dadurch gekennzeichnet, dass** die vinylaromatische Verbindung Styrol ist.

6. Kautschukmischung nach einem der vorherigen Ansprüche, **dadurch gekennzeichnet, dass** das Polymer A folgende Formel II) aufweist:
II) F-(SBR-Y-SBR-Sₓ)_{z}-SBR-Y-SBR-F,
wobei
S ein Schwefelatom ist, und
SBR eine elastomere Polymerkette ist, die durch anionische Polymerisation von 1,3-Butadien und Styrol in der Anwesenheit eines Diinitiators erhalten wurde, und
Y eine Dicarbanion-Gruppe ist, die abgeleitet ist von dem Diinitiator, und
x unabhängig für jede Sₓ-Gruppe eine ganze Zahl gleich 1 oder größer ist, mit der Bedingung, dass x für wenigstens eine Sₓ-Gruppe ausgewählt ist aus den Zahlen 2, 3 und 4, und
z eine ganze Zahl von 1 bis 160 ist, und
jedes F unabhängig voneinander eine Endgruppe ausgewählt aus der Gruppe bestehend aus -H, -SH, -SOH, -SCl, -SSCl, -SO₂H und -SO₃H ist.

7. Kautschukmischung nach einem der vorherigen Ansprüche, **dadurch gekennzeichnet, dass** der Diinitiator wenigstens eine Organolithium-Verbindung ist.

8. Kautschukmischung nach einem der vorherigen Ansprüche, **dadurch gekennzeichnet, dass** das Polymer A einen Schwefelgehalt von 0,1 bis 30 g pro kg Polymer aufweist.

9. Kautschukmischung nach einem der vorherigen Ansprüche, **dadurch gekennzeichnet, dass** es sich bei dem Füllstoff um wenigstens eine Kieselsäure und/oder wenigstens einen Ruß handelt.

10. Fahrzeugreifen, **dadurch gekennzeichnet, dass** er in wenigstens einem Bauteil wenigstens eine Kautschukmischung nach einem der Ansprüche 1 bis 9 enthält.

## Claims

1. Rubber mixture, **characterized in that** it comprises at least the following constituents:
- from 5 to 100 phr of at least one polymer A according to the following formula I):
I ) F- (P-Y-P-Sₓ)_{z}-P-Y-P-F
where
S is a sulphur atom, and
P is an elastomeric polymer chain obtained via anionic polymerization of at least one conjugated diene and optionally of at least one vinylaromatic compound in the presence of a diinitiator,
and
Y is a dicarbanion group derived from the diinitiator, and
x, independently for each Sₓ group, is an integer greater than or equal to 1,
with the condition that for at least one Sₓ group, x is selected from the numbers 2, 3 and 4, and
z is an integer from 1 to 160, and
each F is mutually independently a terminal group selected from the group consisting of -H, -SH, -SOH, -SCl, -SSCl, -SO₂H and -SO₃H
and
- at least one filler.

2. Rubber mixture according to Claim 1, **characterized in that** the at least one conjugated diene is selected from the group consisting of 1,3-butadiene and/or isoprene and/or 2,3-dimethyl-1,3-butadiene and/or 1,3-pentadiene and/or 2,4-hexadiene and/or 1,3-hexadiene and/or 1,3-heptadiene and/or 1,3-octadiene and/or 2-methyl-2,4-pentadiene and/or cyclopentadiene and/or 2,4-hexadiene and/or 1,3-cyclooctadiene.

3. Rubber mixture according to Claim 2, **characterized in that** the at least one conjugated diene is 1,3-butadiene.

4. Rubber mixture according to any of the preceding claims, **characterized in that** the vinylaromatic compound is selected from the group consisting of styrene and/or 2-methylstyrene and/or 3-methylstyrene and/or 4-methylstyrene and/or 2,4-dimethylstyrene and/or 2,4,6-trimethylstyrene and/or alpha-methylstyrene and/or 2,4-diisopropylstyrene and/or 4-tert-butylstyrene and/or stilbene and/or vinylbenzyldimethylamine and/or 4-vinylbenzyl dimethylaminoethyl ether and/or N,N-dimethylaminoethylstyrene and/or tert-butoxystyrene and/or vinylpyridine and/or 1,2-divinylbenzene and/or 1,3-divinylbenzene and/or 1,4-divinylbenzene.

5. Rubber mixture according to Claim 4, **characterized in that** the vinylaromatic compound is styrene.

6. Rubber mixture according to any of the preceding claims, **characterized in that** the polymer A has the following formula II):
II) F-(SBR-Y-SBR-Sₓ)_{z}-SBR-Y-SBR-F,
where
S is a sulphur atom, and
SBR is an elastomeric polymer chain obtained via anionic polymerization of 1,3-butadiene and styrene in the presence of a diinitiator, and
Y is a dicarbanion group derived from the diinitiator, and
x, independently for each Sₓ group, is an integer greater than or equal to 1,
with the condition that for at least one Sₓ group, x is selected from the numbers 2, 3 and 4, and
z is an integer from 1 to 160, and
each F is mutually independently a terminal group selected from the group consisting of -H, -SH, -SOH, -SCl, -SSC1, -SO₂H and -SO₃H.

7. Rubber mixture according to any of the preceding claims, **characterized in that** the diinitiator is at least one organolithium compound.

8. Rubber mixture according to any of the preceding claims, **characterized in that** the sulphur content of the polymer A is from 0.1 to 30 g per kg of polymer.

9. Rubber mixture according to any of the preceding claims, **characterized in that** the filler is at least one silica and/or at least one carbon black.

10. Tyre, **characterized in that** it comprises, in at least one component, at least one rubber mixture according to any of Claims 1 to 9.

## Revendications

1. Mélange de caoutchouc, **caractérisé en ce qu'**il contient au moins les constituants suivants :
- 5 à 100 phr (parties par cent parties) d'au moins un polymère A selon la formule I) suivante :
I) F- (P-Y-P-Sₓ)_{z}-P-Y-P-F
dans laquelle
S représente un atome de soufre, et
P représente une chaîne polymère élastomère qui a été obtenue par polymérisation anionique d'au moins un diène conjugué et éventuellement d'au moins un composé aromatique de vinyle en présence d'un di-initiateur, et
Y représente un groupe dicarbanion, qui est dérivé du di-initiateur, et
x représente, indépendamment pour chaque groupe Sₓ, un nombre entier de 1 ou plus, à condition que x, pour au moins un groupe Sₓ, soit choisi parmi les nombres 2, 3 et 4, et
z vaut un nombre entier de 1 à 160, et chaque F, indépendamment, représente un groupe terminal, choisi dans le groupe constitué par -H, -SH, -SOH, -SCl, -SSCl, -SO₂H et -SO₃H, et
- au moins une charge.

2. Mélange de caoutchouc selon la revendication 1, **caractérisé en ce que** ledit au moins un diène conjugué est choisi dans le groupe constitué par le 1,3-butadiène et/ou l'isoprène et/ou le 2,3-diméthyl-1,3-butadiène et/ou le 1,3-pentadiène et/ou le 2,4-hexadiène et/ou le 1,3-hexadiène et/ou le 1,3-heptadiène et/ou le 1,3-octadiène et/ou le 2-méthyl-2,4-pentadiène et/ou le cyclopentadiène et/ou le 2,4-hexadiène et/ou le 1,3-cyclooctadiène.

3. Mélange de caoutchouc selon la revendication 2, **caractérisé en ce que** ledit au moins un diène conjugué est le 1,3-butadiène.

4. Mélange de caoutchouc selon l'une quelconque des revendications précédentes, **caractérisé en ce que** le composé aromatique de vinyle est choisi dans le groupe constitué par le styrène et/ou le 2-méthylstyrène et/ou le 3-méthylstyrène et/ou le 4-méthylstyrène et/ou le 2,4-diméthylstyrène et/ou le 2,4,6-triméthylstyrène et/ou l'alpha-méthylstyrène et/ou le 2,4-diisopropylstyrène et/ou le 4-tert-butylstyrène et/ou le stilbène et/ou la vinylbenzyldiméthylamine et/ou le (4-vinylbenzyl)diméthylaminoéthyléther et/ou le N,N-diméthylaminoéthylstyrène et/ou le tert-butoxystyrène et/ou la vinylpyridine et/ou le 1,2-divinylbenzène et/ou le 1,3-divinylbenzène et/ou le 1,4-divinylbenzène.

5. Mélange de caoutchouc selon la revendication 4, **caractérisé en ce que** le styrène aromatique de vinyle est le styrène.

6. Mélange de caoutchouc selon l'une quelconque des revendications précédentes, **caractérisé en ce que** le polymère A présente la formule II) suivante :
II) F-(SBR-Y-SBR-Sₓ)_{z}-SBR-Y-SBR-F,
dans laquelle
S représente un atome de soufre, et
SBR représente une chaîne polymère élastomère qui a été obtenue par polymérisation anionique de 1,3-butadiène et de styrène en présence d'un di-initiateur, et
Y représente un groupe dicarbanion, qui est dérivé du di-initiateur, et
x représente, indépendamment pour chaque groupe Sₓ, un nombre entier de 1 ou plus, à condition que x, pour au moins un groupe Sₓ, soit choisi parmi les nombres 2, 3 et 4, et
z vaut un nombre entier de 1 à 160,
et chaque F, indépendamment, représente un groupe terminal, choisi dans le groupe constitué par -H, -SH, -SOH, -SCl, -SSCl, -SO₂H et -SO₃H.

7. Mélange de caoutchouc selon l'une quelconque des revendications précédentes, **caractérisé en ce que** le di-initiateur est au moins un composé organolithique.

8. Mélange de caoutchouc selon l'une quelconque des revendications précédentes, **caractérisé en ce que** le polymère A présente une teneur en soufre de 0,1 à 30 g par kg de polymère.

9. Mélange de caoutchouc selon l'une quelconque des revendications précédentes, **caractérisé en ce qu'**il s'agit, pour la charge, d'au moins une silice et/ou d'au moins une suie.

10. Pneumatique pour véhicule, **caractérisé en ce qu'**il contient, dans au moins un élément, au moins un mélange de caoutchouc selon l'une quelconque des revendications 1 à 9.
